# EUROPÄISCHE PATENTSCHRIFT

(11) **EP 2 592 461 B1**
(45) Veröffentlichungstag und Bekanntmachung des Hinweises auf die Patenterteilung: **14.02.2018**
(21) Anmeldenummer: 12192156.3
(22) Anmeldetag: 12.11.2012
(51) Int. Cl.: G02B 21/16, G02B 21/36, G02B 27/58, G02B 27/00, G01N 21/64

(54) **Mikroskopische Einrichtung und Verfahren zur dreidimensionalen Lokalisierung von punktförmigen Objekten in einer Probe**
Microscopic device and method for three-dimensional localization of punctiform objects in a sample
Dispositif microscopique et procédé de localisation tridimensionnelle d'objets ponctuels dans un échantillon

(30) Priorität: 11.11.2011 DE 102011055294
(43) Veröffentlichungstag der Anmeldung: 15.05.2013
(73) Patentinhaber: Leica Microsystems CMS GmbH, 35578 Wetzlar (DE)
(72) Erfinder: Fölling, Jonas, 69115 Heidelberg (DE)
(74) Vertreter: Schaumburg und Partner Patentanwälte mbB

(56) Entgegenhaltungen:
- WO-A1-2009/085218
- WO-A1-2010/062364
- WO-A1-2011/085766
- DE-A1- 10 319 659
- DE-A1-102005 040 827
- US-A- 5 896 224
- US-A1- 2004 238 731
- US-A1- 2008 182 336

## Beschreibung

In jüngerer Vergangenheit wurden lichtmikroskopische Abbildungsverfahren entwickelt, mit denen sich basierend auf einer sequentiellen, stochastischen Lokalisierung von einzelnen Markern, insbesondere Fluoreszenzmolekülen, Probenstrukturen darstellen lassen, die kleiner sind als die beugungsbedingte Auflösungsgrenze klassischer Lichtmikroskope. Solche Verfahren sind beispielsweise beschrieben in WO 2006/127692 A2; DE 10 2006 021 317 B3; WO 2007/128434 A1; US 2009/0134342 A1; DE 10 2008 024 568 A1; WO 2008/091296 A2; US 2008/0182336 A1; WO 2009/085218 A1; WO 2011/085766 A1; "Sub-diffraction-limit imaging by stochastic optical reconstruction microscopy (STORM)", Nature Methods 3, 793-796 (2006), M. J. Rust, M. Bates, X. Zhuang; "Resolution of Lambda/10 in fluorescence microscopy using fast single molecule photo-switching", Geisler C. et al, Appl. Phys. A, 88, 223-226 (2007). Dieser neue Zweig der Mikroskopie wird auch als Lokalisierungsmikroskopie bezeichnet. Die angewandten Verfahren sind in der Literatur z.B. unter den Bezeichnungen (F)PALM ((Fluorescence) Photoactivation Localization Microscopy), PALMIRA (PALM with Independently Running Acquisition), GSD(IM) (Ground State Depletion Individual Molecule return) Microscopy) oder (F)STORM ((Fluorescence) Stochastic Optical Reconstruction Microscopy) bekannt.

Den neuen Verfahren ist gemein, dass die abzubildenden Probenstrukturen mit punktförmigen Objekten, sogenannten Markern präpariert werden, die über zwei unterscheidbare Zustände verfügen, nämlich einen "hellen" Zustand und einen "dunklen" Zustand. Werden beispielsweise Fluoreszenzfarbstoffe als Marker verwendet, so ist der helle Zustand ein fluoreszenzfähiger Zustand und der dunkle Zustand ein nicht fluoreszenzfähiger Zustand.

In bevorzugten Ausführungsformen werden, wie z.B. in der WO 2008/091296 A2 und der WO 2006/127692 A2, photoschaltbare oder photoaktivierbare Fluoreszenzmoleküle verwendet. Alternativ können, wie z.B. in der DE 10 2006 021317 B3, inhärente Dunkelzustände von Standard-Fluoreszenzmolekülen genutzt werden.

Zur Abbildung von Probenstrukturen mit einer Auflösung, die höher als die klassische Auflösungsgrenze der bildgebenden Optik ist, wird nun wiederholt eine kleine Teilmenge der Marker in den hellen Zustand überführt. Dabei ist die Dichte der diese aktive Teilmenge bildenden Marker so zu wählen, dass der mittlere Abstand benachbarter Marker im hellen und damit lichtmikroskopisch abbildbaren Zustand größer als die Auflösungsgrenze der bildgebenden Optik ist. Die die aktive Teilmenge bildenden Marker werden auf einem räumlich auflösenden Lichtdetektor, z.B. eine CCD-Kamera, abgebildet, so dass von jedem punktförmigen Marker eine Lichtverteilung in Form eines Lichtflecks erfasst wird, dessen Größe durch die Auflösungsgrenze der Optik bestimmt ist.

Auf diese Weise wird eine Vielzahl von Rohdaten-Einzelbildern aufgenommen, in denen jeweils eine andere aktive Teilmenge abgebildet ist. In einem Bildanalyse-Prozess werden dann in jedem Rohdaten-Einzelbild die Schwerpunktpositionen der Lichtverteilungen bestimmt, die die im hellen Zustand befindlichen, punktförmigen Marker darstellen. Die aus den Rohdaten-Einzelbildern ermittelten Schwerpunktpositionen der Lichtverteilungen werden dann in einer Gesamtdarstellung in Form eines Gesamtbild-Datensatzes zusammengetragen. Das durch diese Gesamtdarstellung entstehende hochaufgelöste Gesamtbild spiegelt die Verteilung der Marker wider.

Für eine repräsentative Wiedergabe der abzubildenden Probenstruktur müssen ausreichend viele Markersignale detektiert werden. Da jedoch die Anzahl an Markern in der jeweils aktiven Teilmenge durch den minimalen mittleren Abstand, den zwei Marker im hellen Zustand voneinander haben müssen, limitiert ist, müssen sehr viele Rohdaten-Einzelbilder aufgenommen werden, um die Probenstruktur vollständig abzubilden. Typischerweise liegt die Anzahl an Rohdaten-Einzelbildern in einem Bereich von 10.000 bis 100.000.

Neben der vorstehend beschriebenen lateralen Positionsbestimmung der Marker in der Objektebene (im Folgenden auch als x-y-Ebene bezeichnet) kann auch eine Positionsbestimmung in axialer Richtung (im Folgenden auch als z-Richtung bezeichnet) erfolgen. Mit axialer Richtung ist dabei die Richtung in der optischen Achse des bildgebenden Systems, also die Hauptausbreitungsrichtung des Lichtes gemeint.

Dreidimensionale Lokalisierungen sind aus so genannten "Particle-Tracking"-Experimenten bekannten, wie sie in Kajo et.al., 1994, Biophysical Journal, 67, Holtzer et. al., 2007, Applied Physics Letters, 90 und Toprak et al., 2007, Nano Letters, 7(7) beschrieben sind. Sie wurden auch schon in bildgebenden Verfahren angewandt, die auf dem oben beschriebenen Schalten und Lokalisieren von Einzelmolekülen basieren. Hierzu wird auf Huang et al, 2008, Science, 319 und Juette et al., 2008, Nature Methods, verwiesen. Zum Stand der Technik wird ferner auf Bossi et al., 2008, Nano Letters, 8(8), 2463-2468 und Pavani et al., 2009, PNAS, 106, verwiesen.

Eine Lokalisierung eines punktförmigen Objektes in z-Richtung kann grundsätzlich dadurch erfolgen, dass man die Veränderung eines auf der Detektionsfläche der Kamera erfasste Lichtflecks auswertet, die sichtbar wird, wenn sich das punktförmige Objekt aus der zur Detektionsfläche optisch konjugierten Schärfen- oder Fokalebene herausbewegt. Dabei ist im Folgenden unter einem punktförmigen Objekt ein Objekt zu verstehen, dessen Abmessungen kleiner als die beugungsbedingte Auflösungsgrenze des bildgebenden Systems, insbesondere des Detektionsobjektivs sind. In diesem Fall bildet das Detektionsobjektiv ein solches Objekt in Form einer dreidimensionalen Fokuslichtverteilung in den Bildraum ab. Die Fokuslichtverteilung erzeugt auf der Detektionsfläche der Kamera einen Lichtfleck, der in der Literatur auch als "Point-Spread-Function", also Punktabbildungsfunktion oder kurz PSF bezeichnet wird. Wird nun das punktförmige Objekt in z-Richtung durch den Fokus, d.h. senkrecht zur Schärfenebene bewegt, so ändern sich Größe und Form der PSF. Analysiert man das dem erfassten Lichtfleck entsprechende Detektionssignal im Hinblick auf Größe und Form der PSF, so kann man dadurch Rückschlüsse auf die tatsächliche z-Position des Objekts erhalten.

Bei einer dreidimensionalen Lokalisierung besteht allerdings das grundsätzliche Problem, dass die von einem punktförmigen Objekt herrührende PSF bezüglich der Detektionsebene symmetrisch ist. Dies bedeutet, dass sich die PSF zwar ändert, wenn das punktförmige Objekt aus der Schärfenebene herausbewegt wird, so dass sich der Abstand des Objektes zur Schärfenebene bestimmten lässt. Jedoch ist die Änderung der PSF symmetrisch zu beiden Seiten der Schärfenebene, so dass sich nicht entscheiden lässt, auf welcher Seite der Schärfenebene sich das punktförmige Objekt befindet.

Die dreidimensionale Lokalisierung von punktförmigen Objekten wird noch schwieriger, wenn so genannte Mehrfarbmessungen durchgeführt werden sollen, bei denen die Probe mit verschiedenen Farbstoffen markiert wird und die Detektionssignale, die für diese verschiedenen Farbstoffe erfasst werden, getrennt werden müssen. Mehrfarbmessungen sind insbesondere bei der Co-Lokalisation von Strukturen, wie z.B. von Proteinen, innerhalb einer Zelle hilfreich. Ist es möglich, die Detektionssignale der verschiedenen Farbstoffe zu trennen, so lässt sich eine Aussage über die jeweilige Verteilung der Farbstoffe und damit der verschiedenen Strukturen treffen.

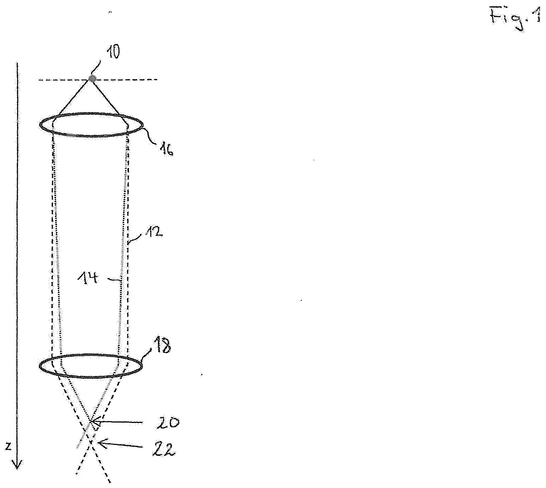

Ein grundsätzliches Problem, das in der hochauflösenden Lokalisierungsmikroskopie bei Mehrfarbmessungen auftritt, ist der so genannte Farblängsfehler (auch als chromatische Längsaberration bezeichnet), den jedes Detektionsobjektiv bis zu einem gewissen Grad aufweist. Unter Farblängsfehler versteht man einen Abbildungsfehler, der dafür sorgt, dass ein Objekt, welches Licht unterschiedlicher Farbe aussendet, wellenlängenabhängig in unterschiedliche Bildebenen abgebildet wird. Dies ist in Figur 1 veranschaulicht, für die angenommen wird, dass ein punktförmiges Objekt 10 Licht zweier Wellenlängen aussendet (in Figur 1 als gestrichelte bzw. gepunktete Linie dargestellt und mit 12 bzw. 14 bezeichnet). Der Farblängsfehler, der in einer aus einem Objektiv 16 und einer Tubuslinse 18 gebildeten Detektionsoptik auftritt, führt nun dazu, dass die von der Detektionsoptik für die verschiedenen Wellenlängen erzeugten Fokuslichtverteilungen in z-Richtung gegeneinander versetzt sind. Die Schwerpunkte der gegeneinander versetzten Fokuslichtverteilungen sind in Figur 1 mit 20 bzw. 22 bezeichnet.

Der Farblängsfehler ist durch die Tatsache bedingt, dass das Linsenmaterial Dispersion aufweist, d.h. für unterschiedliche Lichtwellenlängen unterschiedliche Brechungsindizes besitzt. Bis zu einem gewissen Grad kann der Farblängsfehler durch ein geschicktes Linsendesign verringert werden. So besitzen typische Hochleistungsobjektive beispielsweise einen Farblängsfehler von 150-200 nm, was bedeutet, dass ein blauer Farbstoff und ein roter Farbstoff, die in der gleichen Schärfenebene sitzen, um 150 bis 200 nm in z-Richtung versetzt zueinander abgebildet werden. Bei konfokalen Rastermikroskopen, wie sie beispielsweise aus US 2004/0238731 A1 oder DE 103 19 659 A1 bekannt sind, werden Farblängsfehler rechnerisch korrigiert.

In der herkömmlichen Mikroskopie sind Farblängsfehler in dem vorstehend genannten Bereich tolerabel, da die erreichbaren Auflösungen in z-Richtung ohnehin nur in einem Bereich von 600 bis 1000 nm liegen. Demgegenüber werden jedoch in der auf der Detektion von Einzelmolekülen basierenden Lokalisierungsmikroskopie mittlerweile sehr viel bessere Auflösungen erreicht. So sind Auflösungen unter 50 nm realisierbar. Bei solchen Auflösungen ist ein Farblängsfehler vorstehend genannter Größe sind mehr tolerierbar.

Aufgabe der Erfindung ist es, eine auf einer Mehrfarbmessung beruhende dreidimensionale Lokalisierung von punktförmigen Objekten mit hoher Genauigkeit insbesondere in z-Richtung zu ermöglichen.

Die Erfindung löst diese Aufgabe durch die mikroskopische Einrichtung nach Anspruch 1 und das Verfahren nach Anspruch 7.

In einer besonders bevorzugten Ausführungsform umfasst eine Einrichtung zur dreidimensionalen Lokalisierung von punktförmigen Objekten in einer Probe umfasst eine Detektionsoptik, die in einem Objektraum angeordnete punktförmige Objektes jeweils in Form einer dreidimensionalen Fokuslichtverteilung in einen Bildraum abbildet; eine Farbtrennvorrichtung, die das von der Detektionsoptik zum Abbilden der punktförmigen Objekte erzeugte Licht in mindestens zwei separate Lichtbündel teilt, deren Lichtwellenlängen in unterschiedlichen Wellenlängenbereichen liegen; mindestens zwei in dem Bildraum angeordnete Detektoreinheiten, von denen eine Detektoreinheit das eine der beiden Lichtbündel und die andere Detektoreinheit das andere der beiden Lichtbündel empfängt, wobei jede Detektoreinheit eine zur Einfallsrichtung des jeweiligen Lichtbündels senkrecht angeordnete Detektionsfläche zum Erfassen von Lichtflecken aufweist, die jeweils einen ebenen Schnitt durch die zugehörige Fokuslichtverteilung darstellen; eine Auswerteeinheit, die durch Auswerten des jeweiligen auf der jeweiligen Detektionsfläche erfassten Lichtflecks eine laterale x-y-Position des zugehörigen punktförmigen Objektes innerhalb einer zu einer Schärfenebene parallelen Objektebene und eine axiale z-Position des zugehörigen punktförmigen Objektes relativ zu der Schärfenebene in Richtung einer senkrecht zu der Schärfenebene liegenden optischen Achse ermittelt, wobei die jeweilige Schärfenebene eine in dem Objektraum liegende Ebene ist, die zur einer in dem Bildraum liegenden Detektionsebene, in der die jeweilige Detektionsfläche angeordnet ist, optisch konjugiert ist; wobei in der Auswerteeinheit für mindestens einen (vorzugsweise jeden) der beiden Wellenlängenbereichen mindestens ein z-Positionskorrekturwert gespeichert ist, der einen Farblängsfehler der Detektionsoptik in diesem Wellenlängenbereich angibt; und die Auswerteeinheit, die die in dem jeweiligen Wellenlängenbereich ermittelte z-Position des jeweiligen punktförmigen Objektes mit dem zugehörigen z-Positionskorrekturwert korrigiert.

Die erfindungsgemäße Einrichtung ist dazu geeignet, Mehrfarbmessungen zur dreidimensionalen Lokalisierung von punktförmigen Objekten mit hoher räumlicher Auflösung insbesondere auch in z-Richtung durchzuführen. Hierzu weist die Lokalisierungseinrichtung eine Farbtrennvorrichtung auf, die das von der Probe ausgesendete Licht in mindestens zwei Wellenlängenbereiche teilt. Werden bei der Mehrfarbmessung Farbstoffe verwendet, deren Emissionsspektren sich nur wenig überlappen, so kann die Farbtrennvorrichtung durch eine geeignete Wahl von Farbfiltern im Detektionsstrahlengang der Einrichtung realisiert sein. In diesem Fall ist jedem Farbstoff ein eigener Detektionsfilter und damit ein eigener Detektionskanal zugeordnet. Die Anzahl der Farbstoffe, die auf diese Weise voneinander getrennt werden können, ist dadurch limitiert, dass die Emissionsspektren der Farbstoffe möglichst ohne größere Überlappung in das zur Verfügung stehende spektrale Fenster des sichtbaren Lichtes passen sollten.

Eine effektive Farbtrennung ist jedoch auch mit nur genau zwei Detektionskanälen möglich. In diesem Fall umfasst die Farbtrennvorrichtung beispielsweise einen dichroitischen Strahlteiler, der das von der Detektionsoptik zum Abbilden der punktförmigen Objekte erzeugte Licht unabhängig von der Anzahl der zu trennenden Farbstoffe nur in genau zwei separate Lichtbündel teilt, die jeweils auf eine Detektoreinheit fallen. Auf diese Weise werden auf den Detektionsflächen der beiden Detektoreinheiten Bilder ein und desselben Objektes in unterschiedlichen Wellenlängenbereichen erfasst. Anhand des Verhältnisses der Helligkeiten dieser beiden Lichtflecke lässt sich dann in einfacher Weise der Farbstoff bestimmen. An dieser Stelle ist darauf hinzuweisen, dass die beiden Detektoreinheiten auch zu einer Einheit zusammengefasst sein können, z.B. in Form einer Kamera, bei der ein Teil des Kamerachips für den einen Detektionskanal und ein anderer Teil des Kamerachips für einen anderen Detektionskanal genutzt wird.

Erfindungsgemäß werden die laterale x-y-Position sowie die axiale z-Position des jeweils betrachteten punktförmigen Objektes durch Auswerten des auf der Detektionsfläche der jeweiligen Detektoreinheit erfassten Lichtflecks ermittelt. Diese Auswertung beinhaltet beispielsweise eine Analyse der Form und der Größe der durch den Lichtfleck gegebenen PSF, um die z-Position des punktförmigen Objektes relativ zur Schärfenebene zu bestimmen. Hierzu ist es beispielsweise denkbar, der Analyse eine geeignete Zuordnungsvorschrift zugrunde zu legen, die einer bestimmten gemessenen Form der PSF die korrekte z-Position zuordnet. Eine solche Zuordnungsvorschrift lässt sich beispielsweise durch Eichmessungen gewinnen, in denen ein punktförmiges Objekt in z-Richtung von einer Seite auf die andere Seite der Schärfenebene bewegt und dabei die Form der PSF für die nun bekannten z-Positionen bestimmt wird. Damit erhält man eine Zuordnungsvorschrift, die es bei späteren Messungen ermöglicht, der gemessenen PSF-Form die richtige z-Position zuzuordnen.

Beispielsweise kann eine Zuordnungsvorschrift angewandt werden, bei der die Differenz der Abmessungen der PSF in z-Richtung und y-Richtung in Bezug zur z-Position gesetzt wird.

Erfindungsgemäß hält die Auswerteeinheit für jeden der mindestens zwei Wellenlängenbereiche mindestens einen z-Positionskorrekturwert vor, der einen Farblängsfehler der Detektionsoptik in dem jeweiligen Wellenlängenbereich angibt. Dadurch ist es möglich, die in vorstehend beschriebener Weise ermittelte z-Position des Objektes mit einem Wellenlängenabhängigen z-Positionskorrekturwert zu korrigieren, um so den in der Detektionsoptik auftretenden Farblängsfehler zu kompensieren. Die Erfindung ermöglicht so eine hoch genaue Lokalisierung verschiedener Farbstoffe auch in z-Richtung.

In einer besonders bevorzugten Ausgestaltung ist eine Vorrichtung vorgesehen, welche die jeweilige Fokuslichtverteilung derart beeinflusst, dass der zugehörige Lichtfleck eine symmetrische Form hat, wenn sich das punktförmige Objekt in der Schärfenebene befindet, dass der zugehörige Lichtfleck eine erste asymmetrische Form hat, wenn sich das punktförmige Objekt auf der der Detektionsoptik abgewandten Seite der Schärfenebene befindet, und dass der zugehörige Lichtfleck eine von der ersten symmetrischen Form unterscheidbare zweite asymmetrische Form hat, wenn sich das punktförmige Objekt auf der der Detektionsoptik zugewandten Seite der Schärfenebene befindet. Durch diese Ausgestaltung wird ein Symmetriebruch derart realisiert, dass sich ein auf der Detektionsfläche erfasster Lichtfleck, der von einem punktförmigen Objekt stammt, das sich auf der einen Seite der Schärfenebene befindet, von einem Lichtfleck unterscheidet, der von einem Objekt auf der anderen Seite der Schärfenebene herrührt. Dabei ist im Folgenden unter "symmetrisch" ein Zustand gemeint, in dem der Lichtfleck bezüglich Spiegelungen an der x-z-Ebene und der y-z-Ebene, die beide senkrecht zu der in der x-y-Ebene angeordneten Detektionsfläche angeordnet sind, symmetrisch ist.

Vorzugsweise umfasst die Vorrichtung zur Beeinflussung der jeweiligen Fokuslichtverteilung eine Zylinderlinse. Eine solche Zylinderlinse erzeugt einen astigmatischen Bildfehler, der eine asymmetrische Änderung der PSF verursacht, wenn das punktförmige Objekt von einer Seite auf die andere Seite der Schärfenebene bewegt wird. Befindet sich das Objekt dagegen in der Schärfenebene, so ist die PSF symmetrisch (z.B. leicht kreuzförmig). Anhand der durch den astigmatischen Bildfehler verursachten asymmetrischen Änderung der PSF-Form auf der Detektionsfläche, d.h. in lateraler Richtung, lässt sich in einfache Weise die genaue z-Position des Objektes bestimmen.

Bei Verwendung einer Zylinderlinse können die den beiden Detektionsflächen zugeordneten Schärfenebenen in dem Objektraum zusammenfallen. Es ist jedoch ebenso möglich, dass der für die Ermittlung der z-Position vorgesehene Symmetriebruch der PSF dadurch erreicht wird, dass die den beiden Detektionsflächen zugeordneten Schärfenebenen in dem Objektraum gegeneinander versetzt sind. Befindet sich in dieser Ausführung ein zu lokalisierendes Objekt in der Schärfenebene des einen Detektionskanals, so wird es dort scharf abgebildet, während es in dem anderen Detektionskanal unscharf abgebildet wird. Ist das Objekt zwischen den beiden Schärfenebenen angeordnet, so wird es auf beiden Detektionskanälen unscharf abgebildet, jedoch auf demjenigen Kanal, dessen Fokuslage näher liegt, schärfer als auf dem anderen Kanal. Da bekannt ist, welcher Detektionskanal welche Fokuslage aufweist, lässt sich auch hier anhand einer Messung entscheiden, in welcher z-Position sich das punktförmige Objekt befindet. Eine geeignete Zuordnungsvorschrift lässt sich wiederum aus Eichmessungen gewinnen. Eine denkbare Zuordnungsvorschrift wäre hier z.B. die Differenz zwischen dem Durchmesser des in dem einen Detektionskanal erfassten Lichtflecks und dem Durchmesser des in dem anderen Detektionskanal erfassten Lichtflecks.

Der erfindungsgemäße Symmetriebruch der PSF kann auch in anderer Weise realisiert werden, z.B. nach der so genannten Doppelhelixmethode, die in Pavani et al., 2009, PNAS, 106, beschrieben ist.

Vorzugsweise ist eine Stellvorrichtung vorgesehen, um einen Probenträger und/oder die Detektionsoptik, insbesondere das Detektionsobjektiv, längs der optischen Achse zu bewegen. Dadurch ist es möglich, die Probe und damit die zu lokalisierenden punktförmigen Objekte in z-Richtung, d.h. in Richtung der optischen Achse, relativ zur Schärfenebene der Detektionsoptik zu verfahren, um die (asymmetrische) Änderung der Form der dem jeweiligen Objekt zugeordneten PSF zu bestimmten und daraus die z-Position des Objektes zu ermitteln.

Vorzugsweise hat die erfindungsgemäße Lokalisierungseinrichtung eine Lichtquelle zum Aussenden von Anregungslicht auf die Probe und eine Lichtquelle nachgeordnete Vorrichtung zur spektralen Variation des auf die Probe gesendeten Anregungslichtes. Indem das auf die Probe gerichtete Anregungslicht in seiner spektralen Zusammensetzung variiert werden kann, ist es möglich, beispielsweise durch Verwendung von reflektierenden Eichkörpern die Farblängsfehler der Detektionsoptik genau für diejenigen Wellenlängen zu bestimmen und in Form der z-Positionskorrektur Werte vorzuhalten, die in späteren Messungen von den zu lokalisierenden Farbstoffen abgegeben werden.

In einer vorteilhaften Weiterbildung des erfindungsgemäßen Verfahrens ist vorgesehen, eine Eichprobe, die mindestens ein reflektierendes oder streuendes punktförmiges Eichobjekt enthält, mit Licht verschiedener Eichwellenlängen zu beleuchten, für jede Eichwellenlänge die z-Position des punktförmigen Eichobjektes zu ermitteln, die Abweichungen zwischen den für die verschiedenen Eichwellenlängen ermittelten z-Positionen des Eichobjektes zu bestimmen und anhand dieser Abweichungen die wellenlängenabhängigen z-Positionskorrekturwerte festzulegen. Diese vorteilhafte Ausgestaltung besteht darin, eine Eichung zum Festlegen der die Farblängsfehler angebenden z-Positionskorrekturwerte unter Verwendung einer Eichprobe, z.B. eines Glassubstrats, vorzunehmen, auf oder in dem sich reflektierende oder streuende Eichobjekte, wie z.B. Goldkügelchen oder metallische Nanopunkte, befinden. Die Eichobjekte können zur Bestimmung der Farblängsfehler mit der gleichen Lichtverteilung bestrahlt werden, die die später zu lokalisierenden Farbstoffe in ihrer Emission aufweisen. Die Eichobjekte leuchten somit mit der gleichen Wellenlänge wie die später zu untersuchenden Farbstoffe. Die Eichobjekte können nun nacheinander mit den gewünschten Wellenlängen beleuchtet werden. Für jede Wellenlänge wird dann die z-Position des betrachteten Eichobjektes bestimmt. Dabei ist es möglich, für jede einzelne Eichwellenlänge mehrere Eichmessungen für verschiedene z-Positionen der Eichprobe durchzuführen. Ebenso kann auch eine bestimmte z-Position der Eichprobe angefahren werden, um dann in dieser z-Position die verschiedenen Eichwellenlängen einzustellen. In jedem Fall lässt sich so die benötigte Eichinformation beispielsweise in Form von Eichkurven für die unterschiedlichen Farbstoffe erzeugen.

Das vorstehend beschriebene Verfahren hat den Vorteil, dass nicht verschiedene Farbstoffkombinationen als Referenzproben bereitgehalten werden müssen, sondern nur eine Eichprobe benötigt wird. Es muss lediglich für jeden zu lokalisierenden Farbstoff eine entsprechende Anregungslichtverteilung erzeugt werden. Dies kann beispielsweise über geeignete Filter erfolgen, die der das Anregungslicht aussendenden Lichtquelle nachgeordnet sind. In diesem Fall ist jedem Farbstofftyp ein Filter zugeordnet, der ein Lichtspektrum erzeugt, das dem Emissionsspektrum des Farbstoffs entspricht.

Vorzugsweise werden z-Positionskorrekturwerte für Wellenlängen, die zwischen jeweils zwei Eichwellenlängen liegen, durch Interpolation der festgelegten z-Positionskorrekturwerte ermittelt. Zusätzlich oder alternativ können z-Positionskorrekturwerte für Wellenlängen, die größer als die größte Eichwellenlänge oder kleiner als die kleinste Eichwellenlänge sind, durch Extrapolation der festgelegten z-Positionskorrekturwerte ermittelt werden. Durch diese vorteilhafte Weiterbildung ist es möglich, auch für einen Wellenlängenbereich, für den keine Eichmessung durchgeführt worden ist, die Farblängsfehler zu bestimmen.

Die Erfindung wird im Folgenden anhand der Figuren näher erläutert. Darin zeigen:
- Fig. 1: eine schematische Darstellung zur Veranschaulichung des in einer Detektionsoptik auftretenden Farblängsfehlers;
- Fig. 2: schematische Darstellungen zur Veranschaulichung, wie eine Zylinderlinse einen Symmetriebruch einer auf einer Detektionsfläche erfassten PSF bewirkt;
- Fig. 3: eine Zuordnungsvorschrift, durch welche die Form der auf der Detektionsfläche erfassten PSF in Bezug zu einer z-Position eines punktförmigen Objektes relativ zu einer Schärfenebene gesetzt ist;
- Fig. 5: eine schematische Darstellung einer erfindungsgemäßen Lokalisierungseinrichtung;

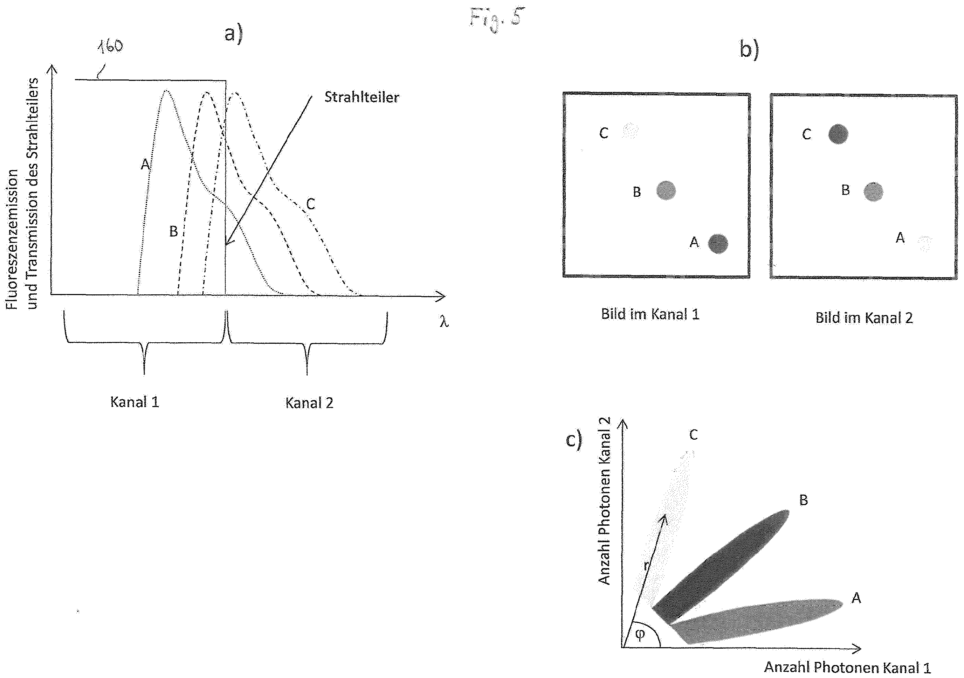

- Fig. 5: schematische Darstellungen zur Veranschaulichung einer spektroskopischen Trennung von verschiedenen Farbstoffen; und

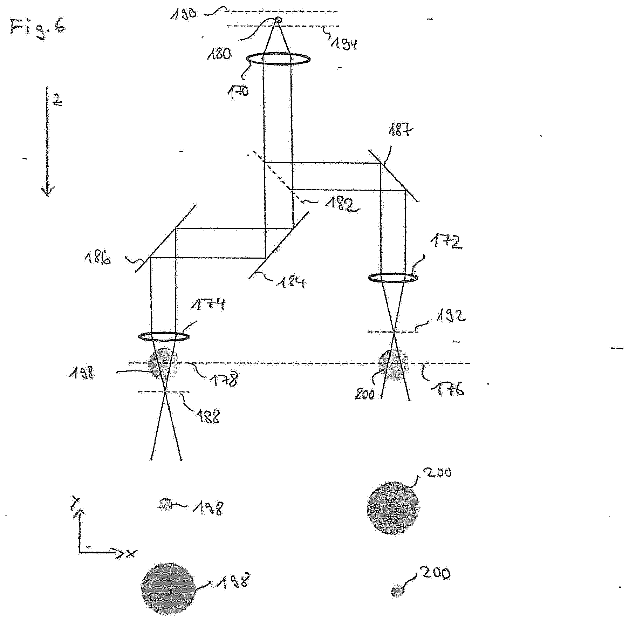

- Fig. 6: eine schematische Darstellung, die eine alternative Ausführungsform zur Auswertung der auf den Detektionsflächen erfassten PSFs zeigt.

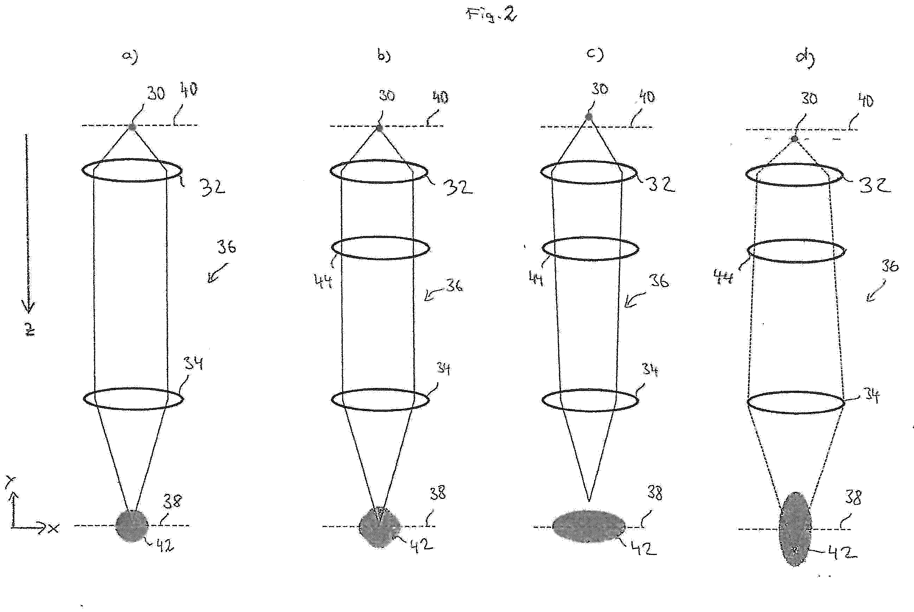

Unter Bezugnahme auf Figur 2 wird zunächst erläutert, wie die z-Position eines punktförmigen Objektes in der vorliegenden Erfindung durch Auswerten einer auf einer Detektionsfläche erfassten PSF ermittelt wird. Dabei soll für die in Figur 2 gezeigten Fälle zur Vereinfachung der Erläuterung zunächst nur monochromatisches Licht betrachtet werden.

Figur 2 zeigt in Teilbild a) eine herkömmliche Anordnung, bei der ein punktförmiges Objekt 30 über eine aus einer Objektivlinse 32 und einer Tubuslinse 34 gebildete Detektionsoptik 36 auf eine Detektionsfläche 38 abgebildet wird. Dabei soll sich das Objekt 30 in einer Schärfenebene 40 befinden, die eine zu der Detektionsfläche 38 optisch konjugierte Fläche ist.

Die Detektionsoptik 36 formt das von dem Objekt 30 ausgehende Licht in eine dreidimensionale Fokuslichtverteilung, die auf die Detektionsfläche 38 fällt. Die Detektionsfläche 38 erfasst so einen Lichtfleck 42, der einen ebenen, senkrecht zur z-Richtung liegenden Schnitt durch die Fokuslichtverteilung darstellt. Um den Sachverhalt besser zu veranschaulichen, ist in Figur 2 der Lichtfleck 42 in der Draufsicht auf die Detektionsfläche 38, d.h. in der x-y-Ebene dargestellt. In dem in Teilbild a) der Figur 2 dargestellten Fall, in dem sich das punktförmige Objekt 30 in der Schärfenebene 40 befindet, hat der Lichtfleck 42 auf der Detektionsfläche 38 eine kreisrunde Form, also eine Form, die symmetrisch bezüglich Spiegelungen an der x-z-Ebene und der y-z-Ebene ist.

Figur 2 zeigt in Teilbild b) eine abgewandelte Ausführung, bei der zusätzlich zu dem Objektiv 30 und der Tubuslinse 34 eine Zylinderlinse 44 vorgesehen ist. Die Zylinderlinse 44 weist in x-y-Richtung unterschiedliche Brechkräfte auf. Dementsprechend ist der Lichtfleck 42 auf der Detektionsfläche 38 in x- und y-Richtung kreuzförmig deformiert. Da sich das punktförmige Objektiv 30 in dem in Teilbild b) dargestellten Fall immer noch in der Schärfenebene 40 befindet, bleibt der kreuzförmige Lichtfleck 42 jedoch symmetrisch in vorstehend angegebenen Sinne.

Figur 2 zeigt in Teilbild c) einen Fall, in dem das punktförmige Objekt 30 oberhalb der Schärfenebene 40 angeordnet ist. Dieser Versatz aus der Schärfenebene 40 führt dazu, dass der Lichtfleck 42 auf der Detektionsebene 38 asymmetrisch zu einer Ellipse verformt wird. Dabei wird die elliptische Form des Lichtflecks 42 umso ausgeprägter, je weiter sich das Objekt 30 von der Schärfenebene entfernt.

Figur 2 zeigt in Teilbild d) einen Fall, in dem sich das punktförmige Objekt 30 unterhalb der Schärfenebene 40 befindet. Auch hier wird der Lichtfleck 42 auf der Detektionsfläche 38 elliptisch verformt, jedoch in einer Ausrichtung, die von der Ausrichtung des Lichtflecks 42 in Teilbild c) verschieden ist. Dementsprechend lässt sich anhand der Form des Lichtflecks 42 erkennen, ob das punktförmige Objekt oberhalb oder unterhalb der Schärfenebene 40 angeordnet ist.

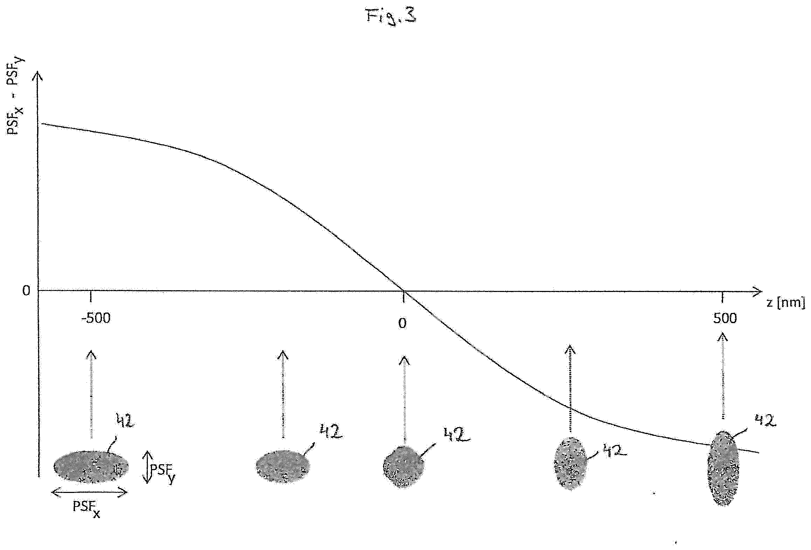

Wie aus den Darstellungen nach Figur 2 hervorgeht, kann die z-Position des punktförmigen Objektes 30 relativ zur Schärfenebene 40 anhand der Form und der Abmessungen des Lichtflecks 42 auf der Detektionsfläche 38 bestimmt werden. Dies erfolgt in dem vorliegenden Ausführungsbeispiel anhand einer Zuordnungsvorschrift, die beispielhaft in Figur 3 dargestellt ist. Diese Zuordnungsvorschrift wird durch Eichmessungen gewonnen, in denen das punktförmige Objekt 30 in z-Richtung verschoben und für einzelne z-Positionen jeweils die Form des Lichtflecks 42, d.h. die Form der PSF bestimmt wird. Bei der in Figur 3 dargestellten Zuordnungsvorschrift wird die Differenz der Längen der beiden senkrecht zueinander liegenden Ellipsenachsen PSFₓ und PSF_{y} als Kenngröße für die Form der PSF herangezogen und den z-Positionen gegenübergestellt. Wie aus der Darstellung nach Figur 3 unmittelbar ersichtlich ist, lässt sich jedem Wert der Differenz PSFₓ - PSF_{y} eindeutig eine z-Position zuordnen. Hat die genannte Differenz den Wert 0, so lässt sich daraus schließen, dass sich das punktförmige Objekt 30 exakt in der Schärfenebene 40 befindet.

Die in Figur 3 dargestellte Zuordnungsvorschrift gilt streng genommen nur für eine einzige vorbestimmte Wellenlänge. Betrachtet man nicht nur eine einzige Wellenlänge, sondern mehrere verschiedene Wellenlängen oder Wellenlängenbereiche, so ergeben sich mehrere Zuordnungsvorschriften, die infolge des Farblängsfehlers gegenüber der in Figur 3 dargestellten Zuordnungsvorschrift verschoben und ggf. auch verformt sind. Im Wesentlichen führt der Farblängsfehler zu einer Verschiebung des in Figur 3 gezeigten Nulldurchgangs. Erfindungsgemäß wird deshalb für jede interessierende Wellenlänge im Rahmen einer Eichmessung eine Zuordnungsvorschrift der in Figur 3 gezeigten Art ermittelt. Aus den vorstehend genannten Verschiebungen der Nulldurchgänge der in dieser Weise erhaltenen Eichkurven werden dann z-Positionskorrekturwerte abgeleitet, die für die jeweilige Wellenlängen die Farblängsfehler der Detektionsoptik repräsentieren und bei der Bestimmung der z-Positionen der punktförmigen Objekte in Anrechnung gebracht werden.

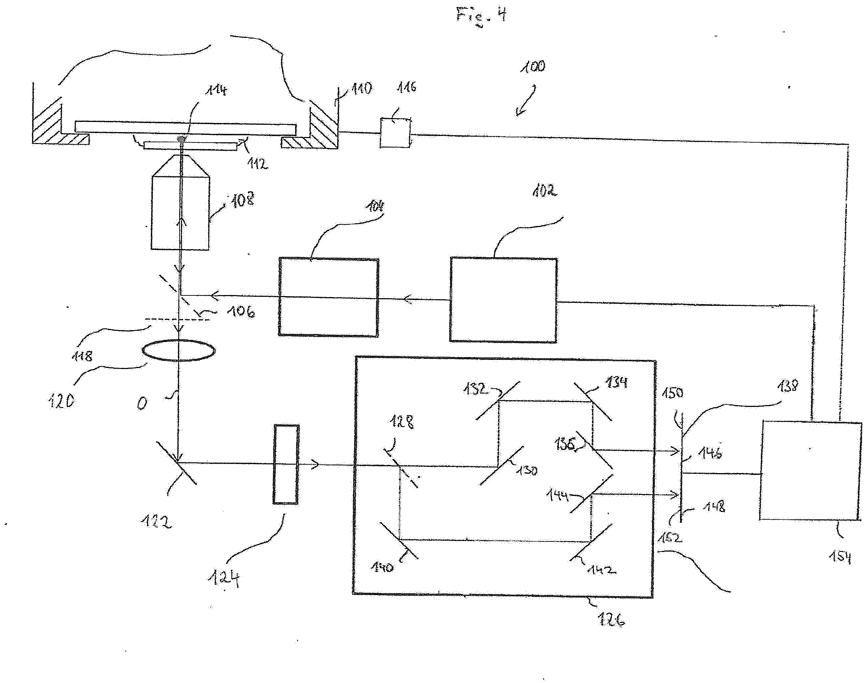

Figur 4 zeigt eine mikroskopische Einrichtung 100, die ein Ausführungsbeispiel der vorliegenden Erfindung darstellt.

Die Einrichtung 100 hat eine Anregungslichtquelle 102, die Anregungslicht auf eine Vorrichtung 104 aussendet, die der spektralen Variation des Anregungslichtes dient. Die Vorrichtung 104 umfasst beispielsweise eine Anordnung von mehreren optischen Filtern, die wahlweise in den Strahlengang des Anregungslichtes eingebracht werden können.

Das von der Vorrichtung 104 ausgesendete Anregungslicht fällt auf einen dichroitischen Strahlteiler 106, der so ausgebildet ist, dass er das Anregungslicht in Richtung eines Objektivs 108 reflektiert. Das Objektiv 108 sendet das Anregungslicht auf eine an einem beweglichen Probenhalter 110 angeordnete Probe 112, die eine Vielzahl von zu lokalisierenden punktförmigen Objekten enthält. Von diesen Objekten ist in Figur 4 rein schematisch nur ein einziges mit 114 bezeichnetes Objekt dargestellt. Dabei sollen die Abmessungen des punktförmigen Objektes 114 kleiner als die beugungsbegrenzte Auflösungsgrenze des Objektivs 108 sein. Der Probenhalter 110 ist mit einer Stellvorrichtung 116 gekoppelt, die dazu dient, den Probenhalter 110 längs einer optischen Achse O zu verschieben.

Das von dem punktförmigen Objekt 114 ausgehende Licht wird durch das Objektiv 108 und fällt auf den Strahlteiler 106. Der Strahlteiler 106 ist so ausgebildet, dass er das von dem Objekt 114 ausgehende Licht auf ein Detektionsfilter 118 transmittiert. Anschließend tritt das Licht durch eine Tubuslinse 120 und fällt auf einen Umlenkspiegel 122. Das an dem Umlenkspiegel 122 reflektierte Licht tritt dann durch eine Zylinderlinse 124, durch die das Licht in der in Figur 2 veranschaulichten Weise beeinflusst wird.

Nach Durchtritt durch die Zylinderlinse 124 gelangt das Licht in eine Farbtrennvorrichtung 126. Die Farbtrennvorrichtung 126 enthält einen dichroitischen Strahlteiler 128, dessen Wirkung später unter Bezugnahme auf Figur 5, Teilbild a) näher erläutert wird. Der dichroitische Strahlteiler 128 lässt einen Teil des Fluoreszenzlichtes innerhalb eines ersten Wellenlängenbereichs durch, während er den übrigen Teil des Fluoreszenzlichtes innerhalb eines zweiten Wellenlängenbereichs reflektiert (vgl. auch Teilbild a) in Figur 5). Der durchgelassene Teil des Fluoreszenzlichtes wird über eine Anordnung von Umlenkspiegeln 130, 132, 134 und 136 auf eine Kamera 138 gelenkt. Der an dem Strahlteiler 128 reflektierte Teil des Fluoreszenzlichtes wird auf einem anderen Lichtweg über eine Anordnung von Umlenkspiegeln 140, 142 und 144 ebenfalls auf die Kamera 138 geleitet. Die Kamera 138 weist zwei separate Detektoreinheiten 146 und 148 mit jeweils einer Detektionsfläche 150 bzw. 152 auf. Der von dem Strahlteiler 128 durchgelassene Teil des Fluoreszenzlichtes fällt auf die Detektionsfläche 150, während der an dem Strahlteiler 128 reflektierte Teil des Fluoreszenzlichtes auf die Detektionsfläche 152 fällt. Die Farbtrennvorrichtung teilt demnach den Detektionsstrahlengang mittels des dichroitischen Strahlteilers 128 in zwei separate Detektionskanäle, von denen einer auf die Detektionsfläche 150 und der andere auf die Detektionsfläche 152 führt.

Die Einrichtung 100 weist ferner eine Steuerung 154 auf, welche die einzelnen Komponenten der Einrichtung 100 ansteuert und die erfindungsgemäße Auswertung der von der Kamera 138 erzeugten Signale zur Lokalisierung des punktförmigen Objektes 114 vornimmt.

Die Farbtrennvorrichtung 126 ermöglicht eine spektroskopische Trennung von verschiedenen in der Probe 112 enthaltenen Farbstoffen, die im Folgenden unter Bezugnahme auf Figur 5 erläutert wird.

Figur 5 zeigt in Teilbild a) die Fluoreszenzemission von drei unterschiedlichen Farbstoffen A, B und C sowie die mit 160 bezeichnete Transmissionskennlinie des dichroitischen Strahlteilers 128. Wie weiter oben erläutert, spaltet der dichroitische Strahlteiler 128 den Detektionsstrahlengang in zwei separate Detektionskanäle, die auf die beiden separaten Detektionsflächen 150 bzw. 152 führen. Da die den beiden Detektionsflächen 150 und 152 zugeordneten Schärfenebenen in dem Objektraum zusammenfallen, erfassen die Detektionsflächen 150 und 152 ein- und denselben Bereich innerhalb der Probe 102. Jedoch sind die Wellenlängenbereiche, die in die beiden Detektionskanäle gelangen, unterschiedlich. So liegt der Emissionsbereich des Farbstoffs A fast vollständig in dem einen Detektionskanal, während der Emissionsbereich des Farbstoffs C fast vollständig in dem anderen Detektionskanal liegt. Der Emissionsbereich des Farbstoffs C liegt etwa in der Mitte der beiden Detektionskanäle.

Wird nun das von einem einzelnen Farbstoff ausgehende Fluoreszenzlicht empfangen, so verteilt sich das Fluoreszenzlicht in der in Teilbild a) der Figur 5 gezeigten Weise auf die beiden Detektionskanäle. Figur 5 zeigt in Teilbild b) beispielhaft auf den Detektionsflächen 150 und 152 erfasste Lichtflecke, die von den drei Farbstoffen A, B und C herrühren. Wie dieser Darstellung zu entnehmen ist, hinterlässt der Farbstoff A in dem einen Detektionskanal einen Lichtfleck mit vergleichsweise hohem Signalpegel, während er in dem anderen Detektionskanal einen Lichtfleck mit einem relativ geringen Signalpegel verursacht. Umgekehrt verhält es sich für den durch den Farbstoff C verursachten Lichtfleck. Der von dem Farbstoff B herrührende Lichtfleck hat dagegen in beiden Detektionskanälen den etwa gleichen Signalpegel.

Für jedes Einzelmolekülsignal kann die Helligkeitsverteilung, d.h. die Verteilung der Photonen auf die beiden Detektionskanäle gemessen und in einem in Teilbild c) der Figur 5 gezeigten Diagramm dargestellt werden. Jedes gemessene Einzelmolekülereignis ergibt in diesem Diagramm einen Messpunkt, der durch die Polarkoordinaten r und φ definiert ist. Dabei gibt der Winkel φ Auskunft über die Farbe des Farbstoffs und der Abstand r vom Ursprung des Koordinatensystems über die Helligkeit. Werden sehr viele Ereignisse von allen drei Farbstoffen A, B und C gemessen, so ergibt sich die in Teilbild c) gezeigte Verteilung, die sich durch drei voneinander trennbare "Farbstoffwolken" auszeichnet. Die räumliche Ausdehnung dieser Farbstoffwolken ist durch die statistische Streuung der Verteilung der Photonen in die jeweiligen Detektionskanäle gegeben, sowie durch die Tatsache, dass die Einzelmolekülereignisse alle unterschiedlich hell sind, da auch die Gesamtanzahl der Photonen pro Ereignis zufällig ist. Wird nun ein Ereignis gemessen, das mit seiner Photonenverteilung in den Bereich einer dieser Farbstoffwolken fällt, so kann man eindeutig feststellen, dass es sich um ein Molekül des Farbstofftyps A, B oder C handelt.

Im Ergebnis können so deutlich mehr Farbstoffe voneinander getrennt werden, als Detektionskanäle benötigt werden. Außerdem können Farbstoffe voneinander getrennt werden, deren Emissionsspektren einander substantiell überlappen. Dies ist von großem Vorteil, da alle Farbstoffe mit demselben Anregungslicht beleuchtet werden. Zudem ist zu erwähnen, dass bei der Kombination der vorstehend unter Bezugnahme auf Figur 5 erläuterten spektroskopischen Signaltrennung und der dreidimensionalen Lokalisierung eine weitere nutzbare Information anfällt, die genutzt werden kann, um den Farblängsfehler zu bestimmen. So wird sich der Farblängsfehler dadurch, dass das Signal in zwei spektral unterschiedliche Detektionskanäle getrennt wird, in jedem Detektionskanal unterschiedlich auswirken. Für ein- und dasselbe Einzelmolekülereignis wird also das Signal in dem einen Detektionskanal anders aussehen als in dem anderen Detektionskanal. Wird dieselbe Zuordnungsvorschrift, anhand der aus der Form der PSF auf die z-Position geschlossen wird, für beide Signale angewandt, so werden sich für die beiden Detektionskanäle unterschiedliche Werte für die z-Position ergeben. Aus diesen beiden Werten lässt sich auf die Verteilung der Farbstoffspektren und damit auf den absoluten Farblängsfehler rückschließen.

Die unter Bezugnahme auf Figur 5 erläuterte spektroskopische Signaltrennung hat einen weiteren Vorteil. Misst man nämlich die in Teilbild c) der Figur 5 dargestellten Farbstoffwolken, so fällt auf, dass die Breite der jeweiligen Farbstoffwolke meist größer ist, als aus rein statistischen Überlegungen zu erwarten wäre. Dies liegt daran, dass Änderungen in der Mikroumgebung eines Farbstoffes Änderungen im Emissionsspektrum zufolge haben können. Je nachdem, wie die unmittelbare Umgebung eines Farbstoffs aussieht, kann also ein Farbstoffmolekül an einer Stelle der Probe ein anderes Spektrum als an einer anderen Stelle haben. Durch die spektroskopische Signaltrennung hat man den Vorteil, dass diese spektroskopische Verschiebung für jedes einzelne Farbstoffmolekül einzeln gemessen und somit auch der Farblängsfehler für jedes einzelne Molekül entsprechend korrigiert werden kann.

Die vorstehend beschriebene Ausführungsform ist nur beispielhaft zu verstehen. Eine dieser möglichen Abwandlungen ist in Figur 6 dargestellt.

Figur 6 zeigt eine Anordnung mit zwei separaten Detektionskanälen, von denen einer im Wesentlichen durch ein Objektiv 170 und eine Tubuslinse 172 und der andere durch das Objektiv 170 und eine Tubuslinse 174 gegeben ist. Das von einem punktförmigen Objekt 180 ausgehende Licht wird durch einen Strahlteiler 182 sowie Umlenkspiegel 184, 186 und 187 zu gleichen Teilen in die beiden Detektionskanäle geleitet. Die beiden Detektionskanäle unterscheiden sich geringfügig hinsichtlich ihrer Fokuslage. Dies bedeutet, dass der eine Detektionskanal eine erste Bildebene 188 aufweist, die zu einer ersten Schärfenebene 190 optisch konjugiert ist, während der andere Detektionskanal eine gegenüber der ersten Bildebene 188 in z-Richtung versetzte zweite Bildebene 192 aufweist, die zu einer zweiten Schärfenebene 194, die wiederum in z-Richtung gegenüber der ersten Schärfenebene 190 versetzt ist, optisch konjugiert ist. Befindet sich das zu lokalisierende Objekt 180 in der Schärfenebene des einen Detektionskanals, so wird es dort scharf abgebildet, während es im anderen Detektionskanal unscharf abgebildet wird. Befindet es sich zwischen den beiden Schärfenebenen 190 und 194, so wird es in beiden Detektionskanälen unscharf abgebildet. Ist das Objekt 180 jenseits beider Fokalebenen 190 und 194 angeordnet, so wird es in beiden Detektionskanälen unscharf abgebildet, jedoch in demjenigen Detektionskanal, dessen Schärfenebene dem Objekt 180 näher ist, schärfer als in dem anderen.

Da von vornherein bekannt ist, welcher Detektionskanal welche Fokuslage hat, lässt sich auch hier anhand einer Messung entscheiden, wo sich das Objekt 180 befindet. Eine geeignete Zuordnungsvorschrift lässt sich wiederum aus Eichmessungen gewinnen. Eine denkbare Zuordnungsvorschrift wäre hier z.B. die Differenz zwischen dem Durchmesser des in dem einen Detektionskanal erfassten Lichtflecks 198 und dem Durchmesser des in dem anderen Detektionskanal erfassten Lichtflecks 200. Eine solche Zuordnungsvorschrift ist ähnlich der in der Figur 3 dargestellten Zuordnungsvorschrift.

## Patentansprüche

1. Mikroskopische Einrichtung (100) zur dreidimensionalen Lokalisierung von punktförmigen Objekten (30, 114) in einer Probe (112), umfassend:
eine Detektionsoptik (36, 108), die in einem Objektraum angeordnete punktförmige Objekte (30, 114) jeweils in Form einer dreidimensionalen Fokuslichtverteilung in einen Bildraum abbildet,
**gekennzeichnet durch**
eine Farbtrennvorrichtung (126), die das von der Detektionsoptik (36, 108) zum Abbilden der punktförmigen Objekte (30, 114) erzeugte Licht in mindestens zwei separate Lichtbündel teilt, deren Lichtwellenlängen in unterschiedlichen Wellenlängenbereichen liegen,
mindestens zwei in dem Bildraum angeordnete Detektoreinheiten (146, 148), von denen eine Detektoreinheit das eine der beiden Lichtbündel und die andere Detektoreinheit das andere der beiden Lichtbündel empfängt, wobei jede Detektoreinheit (146, 148) eine zur Einfallsrichtung des jeweiligen Lichtbündels senkrecht angeordnete Detektionsfläche (38, 150, 152) zum Erfassen von Lichtflecken (42) aufweist, die jeweils einen ebenen Schnitt durch die zugehörige Fokuslichtverteilung darstellen,
eine Auswerteeinheit (154), die durch Auswerten des jeweiligen auf der jeweiligen Detektionsfläche (38, 150, 152) erfassten Lichtflecks (42) eine laterale x-y-Position des zugehörigen punktförmigen Objektes (30, 114) innerhalb einer zu einer Schärfenebene (40) parallelen Objektebene und eine axiale z-Position des zugehörigen punktförmigen Objektes (30, 114) relativ zu der Schärfenebene (40) in Richtung einer senkrecht zu der Schärfenebene (40) liegenden optischen Achse (O) ermittelt, wobei die jeweilige Schärfenebene (40) eine in dem Objektraum liegende Ebene ist, die zu einer in dem Bildraum liegenden Detektionsebene, in der die jeweilige Detektionsfläche (38, 150, 152) angeordnet ist, optisch konjugiert ist,
wobei in der Auswerteinheit (154) für mindestens einen der beiden Wellenlängenbereiche mindestens ein z-Positionskorrekturwert gespeichert ist, der einen Farblängsfehler der Detektionsoptik (36, 108) in diesem Wellenlängenbereich angibt,
die Auswerteeinheit (154) die Farbe des jeweils abgebildeten punktförmigen Objektes (30, 114) an Hand des Verhältnisses der Helligkeiten der von den beiden Detektionsflächen (150, 152) erfassten Lichtflecke ermittelt, die zu diesem punktförmigen Objekt (30, 114) gehören, und der ermittelten Farbe den zugehörigen z-Positionskorrekturwert, der den Farblängsfehler für diese Farbe angibt, zuweist,
die Auswerteeinheit (154) die in dem jeweiligen Wellenlängenbereich ermittelte z-Position des jeweiligen punktförmigen Objektes (30, 114) mit dem zugehörigen z-Positionskorrekturwert korrigiert, und
die den beiden Detektionsflächen zugeordneten Schärfenebenen in dem Objektraum gegeneinander versetzt sind.

2. Mikroskopische Einrichtung (100) nach Anspruch 1, **gekennzeichnet durch** ein Filter, das ausgebildet ist, von einer Lichtquelle ausgesendetes Anregungslicht aus dem von der Detektoreinheit (146, 148) empfangenen Lichtbündel herauszufiltern.

3. Mikroskopische Einrichtung (100) nach Anspruch 1 oder 2, **dadurch gekennzeichnet, dass** die beiden Detektionsflächen die Lichtflecke erfassen, die zu ein und demselben punktförmigen Objekt gehören, und die Auswerteeinheit an Hand des Größenverhältnisses der Lichtflecke die axiale z-Position dieses punktförmigen Objekts (30, 114) ermittelt.

4. Mikroskopische Einrichtung (100) nach einem der vorhergehenden Ansprüche, **dadurch gekennzeichnet, dass** die Farbtrennvorrichtung (126) einen dichroitischen Strahlteiler (128) umfasst.

5. Mikroskopische Einrichtung (100) nach einem der vorgehenden Ansprüche, **gekennzeichnet durch** eine Stellvorrichtung (116) zum Bewegen eines Probenträgers (110) und/oder der Detektionsoptik (36, 108) längs der optischen Achse (O).

6. Mikroskopische Einrichtung (100) nach einem der vorhergehenden Ansprüche, **gekennzeichnet durch** eine Lichtquelle (102) zum Aussenden von Anregungslicht auf die Probe (112) und eine der Lichtquelle nachgeordnete Vorrichtung (104) zum spektralen Variieren des auf die Probe (112) gesendeten Anregungslichtes.

7. Verfahren zur dreidimensionalen Lokalisierung von punktförmigen Objekten (30, 114) in einer Probe (112), umfassend:
Abbilden von in einem Objektraum angeordneten punktförmigen Objekten (30, 114) jeweils in Form einer dreidimensionalen Fokuslichtverteilung in einen Bildraum mittels einer Detektionsoptik (108),
Teilen des von der Detektionsoptik (108) zum Abbilden der punktförmigen Objekte (30, 114) erzeugten Lichtes in mindestens zwei separate Lichtbündel, deren Lichtwellenlängen in unterschiedlichen Wellenlängenbereichen liegen,
Empfangen eines der beiden Lichtbündel mittels einer in dem Bildraum angeordneten Detektoreinheit (146) und des anderen der beiden Lichtbündel mittels einer weiteren in dem Bildraum angeordneten Detektoreinheit (148), wobei jede Detektoreinheit (146, 148) eine zur Einfallsrichtung des jeweiligen Lichtbündels senkrecht angeordnete Detektionsfläche (38, 150, 152) zum Erfassen von Lichtflecken (42) aufweist, die jeweils einen ebenen Schnitt durch die zugehörige Fokuslichtverteilung darstellen,
Ermitteln einer lateralen x-y-Position des jeweiligen punktförmigen Objektes (30, 112) innerhalb einer zu einer Schärfenebene (40) parallelen Objektebene und einer axialen z-Position des jeweiligen punktförmigen Objektes (30, 112) relativ zu der Schärfenebene (40) in Richtung einer senkrecht zu der Schärfenebene (40) liegenden optischen Achse (O) durch Auswerten des zugehörigen auf der Detektionsfläche (38, 150, 152) erfassten Lichtflecks, wobei die jeweilige Schärfenebene (40) eine in dem Objektraum liegende Ebene ist, die zu einer in dem Bildraum liegenden Detektionsebene, in der die jeweilige Detektionsfläche (38, 150, 152) angeordnet ist, optisch konjugiert ist,
Bereitstellen mindestens eines z-Positionskorrekturwertes für mindestens einen der beiden Wellenlängenbereiche, wobei der jeweilige z-Positionskorrekturwert einen Farblängsfehler der Detektionsoptik (108) in dem zugehörigen Wellenlängenbereich angibt,
Ermitteln der Farbe des jeweils abgebildeten punktförmigen Objektes (30, 114) an Hand des Verhältnisses der Helligkeiten der von den beiden Detektionsflächen (150, 152) erfassten Lichtflecke, die zu diesem punktförmigen Objekt (30, 114) gehören, und Zuweisen des zugehörigen z-Positionskorrekturwertes, der den Farblängsfehler für diese Farbe angibt, zu der ermittelten Farbe, und
Korrigieren der in dem jeweiligen Wellenlängenbereich ermittelten z-Position des jeweiligen punktförmigen Objektes (30, 114) mit dem zugehörigen z-Positionskorrekturwert,
wobei die den beiden Detektionsflächen zugeordneten Schärfenebenen in dem Objektraum gegeneinander versetzt sind.

8. Verfahren nach Anspruch 7, **dadurch gekennzeichnet, dass** von einer Lichtquelle ausgesendetes Anregungslicht mittels eines Filters aus dem von der Detektoreinheit (146, 148) empfangenen Lichtbündel herausgefiltert wird.

9. Verfahren nach Ansprüche 7 oder 8, **dadurch gekennzeichnet, dass**
eine Eichprobe, die mindestens ein reflektierendes oder streuendes punktförmiges Eichobjekt enthält, mit Licht verschiedener Eichwellenlängen beleuchtet wird,
für jede Eichwellenlänge die z-Position des punktförmigen Eichobjektes ermittelt wird,
die Abweichungen zwischen den für die verschiedenen Eichwellenlängen ermittelten z-Positionen des Eichobjektes bestimmt werden und
an Hand dieser Abweichungen die wellenlängenabhängigen z-Positionskorrekturwerte festgelegt werden.

10. Verfahren nach Ansprüche 7 oder 8, **dadurch gekennzeichnet, dass**
eine Eichprobe, die mehrere unterschiedliche Fluoreszenzfarbstoffe enthält, mit Licht verschiedener Anregungswellenlängen beleuchtet wird, wobei jede Anregungswellenlänge jeweils einen ihr zugeordneten Fluoreszenzfarbstoff zur Emission von Fluoreszenzlicht anregt, dessen Fluoreszenzwellenlänge von den Fluoreszenzwellenlängen des von den anderen Fluoreszenzfarbstoffen emittierten Fluoreszenzlichtes verschieden ist,
für jede Fluoreszenzwellenlänge, die eine Eichwellenlänge definiert, die z-Position des punktförmigen Eichobjektes ermittelt wird,
die Abweichungen zwischen den für die verschiedenen Eichwellenlängen ermittelten z-Positionen des Eichobjektes bestimmt werden und
anhand dieser Abweichungen die wellenlängenabhängigen z-Positionskorrekturwerte festgelegt werden.

11. Verfahren nach Anspruch 10, **dadurch gekennzeichnet, dass** z-Positionskorrekturwerte für Wellenlängen, die zwischen jeweils zwei Eichwellenlängen liegen, durch Interpolation der festgelegten z-Positionskorrekturwerte ermittelt werden und/oder z-Positionskorrekturwerte für Wellenlängen, die größer als die größte Eichwellenlänge oder kleiner als die kleinste Eichwellenlänge sind, durch Extrapolation der festgelegten z-Positionskorrekturwerte ermittelt werden.

## Claims

1. A microscopic device (100) for three-dimensional localization of point-like objects (30, 114) in a specimen (112), comprising:
a detection optical system (36, 108) that images point-like objects (30, 114) arranged in an object space, each in the form of a three-dimensional focus light distribution, into an image space,
**characterized by**
a color separation apparatus (126) that divides the light generated by the detection optical system (36, 108) for imaging the point-like objects (30, 114) into at least two separate light bundles whose light wavelengths lie in different wavelength regions,
at least two detector units (146, 148) arranged in the image space, of which one detector unit receives the one of the two light bundles and the other detector unit receives the other of the two light bundles, each detector unit (146, 148) comprising a detection surface (38, 150, 152), arranged perpendicular to the incidence direction of the respective light bundle, for sensing light spots (42) that each represent a planar section through the associated focus light distribution,
an evaluation unit (154) that, by evaluating the respective light spot (42) sensed on the respective detection surface (38, 150, 152), ascertains a lateral x-y-position of the associated point-like object (30, 114) within an object plane parallel to a sharpness plane (40), and an axial z-position of the associated point-like object (30, 114) relative to the sharpness plane (40) in the direction of an optical axis (O) located perpendicular to the sharpness plane (40), the respective sharpness plane (40) being a plane, located in the object space, that is optically conjugated with a detection plane which is located in the image space and in which the respective detection surface (38, 150, 152) is arranged,
wherein at least one z-position correction value for at least one of the two wavelength regions is stored in the evaluation unit (154), which value indicates a longitudinal chromatic aberration of the detection optical system (36, 108) in that wavelength region,
the evaluation unit (154) ascertains the color of the respectively imaged point-like object (30, 114) on the basis of the ratio of the brightnesses of the light spots sensed by the two detection surfaces (150, 152) and belonging to that point-like object (30, 114), and assigns the ascertained color to the associated z-position correction value that indicates the longitudinal chromatic aberration for that color,
the evaluation unit (154) corrects the z-position, ascertained in the respective wavelength region, of the respective point-like object (30, 114) using the associated z-position correction value, and
the sharpness planes allocated to the two detection surfaces are offset from one another in the object space.

2. The microscopic device (100) according to claim 1, **characterized by** a filter which is embodied to filter out excitation light, emitted by a light source, from the light bundle received by the detector unit (146, 148).

3. The microscopic device (100) according to claim 1 or 2, **characterized in that** the two detection surfaces sense the light spots that belong to one and the same point-like object, and the evaluation unit ascertains the axial z-position of that point-like object (30, 114) on the basis of the size ratio of the light spots.

4. The microscopic device (100) according to one of the preceding claims, **characterized in that** the color separation apparatus (126) comprises a dichroic beam splitter (128).

5. The microscopic device (100) according to one of the preceding claims, **characterized by** a positioning apparatus (116) for moving a specimen carrier (110) and/or the detection optical system (36, 108) along the optical axis (O).

6. The microscopic device (100) according to one of the preceding claims, **characterized by** a light source (102) for sending excitation light onto the specimen (112) and by an apparatus (104), arranged after the light source, for spectral variation of the excitation light delivered onto the sample (112).

7. A method for three-dimensional localization of point-like objects (30, 114) in a sample (112), comprising:
imaging point-like objects (30, 114) arranged in an object space, each in the form of a three-dimensional focus light distribution, into an image space by means of a detection optical system (108),
dividing the light generated by the detection optical system (108) for imaging the point-like objects (30, 114) into at least two separate light bundles whose light wavelengths lie in different wavelength regions,
receiving one of the two light bundles by means of a detector unit (146) arranged in the image space, and the other of the two light bundles by means of a further detector unit (148) arranged in the image space, each detector unit (146, 148) comprising a detection surface (38, 150, 152), arranged perpendicular to the incidence direction of the respective light bundle, for sensing the light spots (42) that each represent a planar section through the associated focus light distribution,
ascertaining a lateral x-y-position of the respective point-like object (30, 112) within an object plane parallel to a sharpness plane (40), and an axial z-position of the respective point-like object (30, 112) relative to the sharpness plane (40) in the direction of an optical axis (O) located perpendicular to the sharpness plane (40), by evaluating the associated light spot (42) sensed on the detection surface (38, 150, 152), the respective sharpness plane (40) being a plane, located in the object space, that is optically conjugated with a detection plane which is located in the image space and in which the respective detection surface (38, 150, 152) is arranged,
making available at least one z-position correction value for at least one of the two wavelength regions, the respective z-position correction value indicating a longitudinal chromatic aberration of the detection optical system (108) in the associated wavelength region,
ascertaining the color of the respectively imaged point-like object (30, 114) on the basis of the ratio of the brightnesses of the light spots sensed by the two detection surfaces (150, 152) and belonging to that point-like object (30, 114), and assigning the associated z-position correction value that indicates the longitudinal chromatic aberration for that color to the ascertained color, and
correcting the z-position, ascertained in the respective wavelength region, of the respective point-like object (30, 114) using the associated z-position correction value,
the two sharpness planes allocated to the two detection surfaces being offset from one another in the object space.

8. The method according to claim 7, **characterized in that** excitation light emitted by a light source is filtered out by means of a filter from the light bundle received by the detector unit (146, 148).

9. The method according to claim 7 or 8, **characterized in that**
a calibration specimen that contains at least one reflective or scattering point-like calibration object is illuminated with light of different calibration wavelengths,
the z-position of the point-like calibration object is ascertained for each calibration wavelength,
the deviations between the z-positions of the calibration object ascertained for the various calibration wavelengths are determined, and
the wavelength-dependent z-position correction values are identified on the basis of those deviations.

10. The method according to claim 7 or 8, **characterized in that**
a calibration specimen that contains a plurality of different fluorescent dyes is illuminated with light of different excitation wavelengths, wherein each excitation wavelength excites respectively one fluorescent dye allocated thereto for emitting fluorescent light, the fluorescent wavelength of which differs from the fluorescent wavelengths of the fluorescent light emitted by the other fluorescent dyes,
the z-position of the point-like calibration object is ascertained for each fluorescent wavelength which defines a calibration wavelength,
the deviations between the z-positions of the calibration object ascertained for the various calibration wavelengths are determined, and
the wavelength-dependent z-position correction values are identified on the basis of those deviations.

11. The method according to claim 10, **characterized in that** z-position correction values for wavelengths that lie between each two calibration wavelengths are ascertained by interpolation of the identified z-position correction values, and/or z-position correction values for wavelengths that are longer than the longest calibration wavelength or shorter than the shortest calibration wavelength are ascertained by extrapolation of the identified z-position correction values.

## Revendications

1. Dispositif microscopique (100) pour la localisation tridimensionnelle d'objets en forme de points (30, 114) dans un échantillon (112), comprenant :
une optique de détection (36, 108), qui représente des objets en forme de point (30, 114) disposés dans un espace objet respectivement sous la forme d'une distribution tridimensionnelle de lumière focalisée dans un espace image,
**caractérisé par**
un dispositif de séparation des couleurs (126), qui divise la lumière générée par l'optique de détection (36, 108) pour représenter les objets en forme de point (30, 114) en au moins deux faisceaux lumineux séparés, dont les longueurs d'onde optique se situent dans différentes plages de longueurs d'onde,
au moins deux ensembles de détecteurs (146, 148) agencés dans l'espace image, parmi lesquels un ensemble de détecteurs reçoit l'un des deux faisceaux lumineux et l'autre ensemble de détecteurs reçoit l'autre faisceau lumineux, chaque ensemble de détecteurs (146, 148) comprenant une surface de détection (38, 150, 152) positionnée perpendiculairement à la direction d'incidence du faisceau lumineux respectif et destinée à capter des taches lumineuses (42), lesquelles représentent chacune une coupe plane à travers la distribution de lumière focalisée associée,
une unité d'évaluation (154), laquelle, en évaluant les taches lumineuses (42) respectives captées sur les surfaces de détection (38, 150, 152) respectives, détermine une position latérale x-y de l'objet en forme de point (30, 114) associé à l'intérieur d'un plan d'objet parallèle à un plan de netteté (40) et une position axiale z de l'objet en forme de point (30, 114) associé par rapport au plan de netteté (40) en direction d'un axe optique (O) perpendiculaire au plan de netteté (40), le plan de netteté (40) respectif étant un plan qui est situé dans l'espace objet et qui est conjugué optiquement en un plan de détection situé dans l'espace image et dans lequel est positionnée la surface de détection (38, 150, 152) respective,
dans lequel au moins une valeur de correction de position z, laquelle indique une aberration chromatique longitudinale de l'optique de détection (36, 108) dans cette plage de longueurs d'onde, est mise en mémoire dans l'unité d'évaluation (154) pour au moins une des deux plages de longueur d'onde,
l'unité d'évaluation (154) déterminant la couleur de l'objet en forme de point (30, 114) respectivement représenté sur la base du rapport des luminosités des taches lumineuses captées par les deux surfaces de détection (150, 152), lesquelles taches font partie de cet objet en forme de point (30, 114), et allouant à la couleur déterminée la valeur de correction de position z associée qui indique l'aberration chromatique longitudinale pour cette couleur,
l'unité d'évaluation (154) corrigeant la position z de l'objet en forme de point (30, 114) respectif déterminée dans la plage de longueurs d'onde respective au moyen de la valeur de correction de position z associée, et
les plans de netteté associés aux deux surfaces de détection étant mutuellement décalés dans l'espace objet.

2. Dispositif microscopique (100) selon la revendication 1, **caractérisé par** un filtre qui est conçu pour filtrer une lumière d'excitation, émise par une source de lumière, du faisceau lumineux reçu par l'ensemble de détecteurs (146, 148).

3. Dispositif microscopique (100) selon la revendication 1 ou 2, **caractérisé en ce que** les deux surfaces de détection captent les taches lumineuses qui font partie d'un seul et même objet en forme de point, et l'unité d'évaluation détermine, sur la base des proportions des taches lumineuses, la position axiale z de cet objet en forme de point (30, 114).

4. Dispositif microscopique (100) selon l'une quelconque des revendications précédentes, **caractérisé en ce que** le dispositif de séparation des couleurs (126) comporte un séparateur de faisceau dichroïque (128) .

5. Dispositif microscopique (100) selon l'une quelconque des revendications précédentes, **caractérisé par** un dispositif de commande (116) servant à déplacer un porte-échantillon (110) et/ou l'optique de détection (36, 108) le long de l'axe optique (O).

6. Dispositif microscopique (100) selon l'une quelconque des revendications précédentes, **caractérisé par** une source de lumière (102) servant à émettre une lumière d'excitation sur l'échantillon (112) et un dispositif (104) monté en aval de la source de lumière pour la variation spectrale de la lumière d'excitation envoyée sur l'échantillon (112).

7. Procédé de localisation tridimensionnelle d'objets en forme de point (30, 114) dans un échantillon (112), consistant à :
représenter des objets en forme de point (30, 114) disposés dans un espace objet respectivement sous la forme d'une distribution de lumière focalisée tridimensionnelle dans un espace image au moyen d'une optique de détection (108),
diviser la lumière générée par l'optique de détection (108) pour représenter les objets en forme de point (30, 114) en au moins deux faisceaux lumineux séparés, dont les longueurs d'onde optique se situent dans différentes plages de longueurs d'onde,
recevoir l'un des deux faisceaux lumineux au moins d'un ensemble de détecteurs (146) agencé dans l'espace image et l'autre faisceau lumineux au moyen d'un autre ensemble de détecteurs (148) agencé dans l'espace image, chaque ensemble de détecteurs (146, 148) comprenant une surface de détection (38, 150, 152) positionnée perpendiculairement à la direction d'incidence du faisceau lumineux respectif et destinée à capter des taches lumineuses (42), lesquelles représentent chacune une coupe plane à travers la distribution de lumière focalisée associée,
déterminer une position latérale x-y de l'objet en forme de point (30, 112) associé à l'intérieur d'un plan d'objet parallèle à un plan de netteté (40) et une position axiale z de l'objet en forme de point (30, 112) associé par rapport au plan de netteté (40) en direction d'un axe optique (O) perpendiculaire au plan de netteté (40) par évaluation de la tache lumineuse associée captée sur la surface de détection (38, 150, 152) respective, le plan de netteté (40) respectif étant un plan qui est situé dans l'espace objet et qui est conjugué optiquement en un plan de détection situé dans l'espace image et dans lequel est positionnée la surface de détection (38, 150, 152) respective,
fournir au moins une valeur de correction de position z pour au moins une des deux plages de longueur d'onde, la valeur de correction de position z respective indiquant une aberration chromatique longitudinale de l'optique de détection (108) dans la plage de longueurs d'onde associée,
déterminer la couleur de l'objet en forme de point (30, 114) respectivement représenté sur la base du rapport des luminosités des taches lumineuses captées par les deux surfaces de détection (150, 152), lesquelles taches font partie de cet objet en forme de point (30, 114), et allouer à la couleur déterminée la valeur de correction de position z associée qui indique l'aberration chromatique longitudinale pour cette couleur,
corriger la position z de l'objet en forme de point (30, 114) respectif déterminée dans la plage de longueurs d'onde respective au moyen de la valeur de correction de position z associée, et
les plans de netteté associés aux deux surfaces de détection étant mutuellement décalés dans l'espace objet.

8. Procédé selon la revendication 7, **caractérisé en ce qu'**une lumière d'excitation émise par une source de lumière est filtrée du faisceau lumineux reçu par l'ensemble de détecteurs (146, 148) au moyen d'un filtre.

9. Procédé selon la revendication 7 ou 8, **caractérisé en ce que**
un échantillon d'étalonnage, qui contient au moins un objet d'étalonnage en forme de point réfléchissant ou dispersif, est éclairé par une lumière de différentes longueurs d'onde d'étalonnage,
la position z de l'objet d'étalonnage en forme de point est déterminée pour chaque longueur d'onde d'étalonnage,
les écarts entre les positions z de l'objet d'étalonnage déterminées pour les différentes longueurs d'onde d'étalonnage sont déterminés et
les valeurs de correction de position z dépendant des longueurs d'onde sont établies sur la base de ces écarts.

10. Procédé selon les revendications 7 ou 8, **caractérisé en ce que**
un échantillon d'étalonnage, qui contient plusieurs colorants fluorescents différents, est éclairé par une lumière présentant différentes longueurs d'onde d'excitation, chaque longueur d'onde d'excitation excitant dans chaque cas un colorant fluorescent qui lui est associé pour l'émission d'une lumière fluorescente, dont la longueur d'onde de fluorescence est différente des longueurs d'onde de fluorescence de la lumière fluorescente émise par les autres colorants fluorescents,
la position z de l'objet d'étalonnage en forme de point est déterminée pour chaque longueur d'onde de fluorescence qui définit une longueur d'onde d'étalonnage,
les écarts entre les positions z de l'objet d'étalonnage déterminées pour les différentes longueurs d'onde d'étalonnage sont définies et
les valeurs de correction de position z dépendant des longueurs d'onde sont établies sur la base de ces écarts.

11. Procédé selon la revendication 10, **caractérisé en ce que** les valeurs de correction de position z pour les longueurs d'onde qui se situent entre respectivement deux longueurs d'onde d'étalonnage sont déterminées par interpolation des valeurs de correction de position z établies et/ou les valeurs de correction de position z pour les longueurs d'onde qui sont supérieures à la plus grande longueur d'onde d'étalonnage ou inférieures à la plus petite longueur d'onde d'étalonnage sont déterminées par extrapolation des valeurs de correction de position z établies.
